# EUROPEAN PATENT SPECIFICATION

(11) **EP 0 728 537 B1**
(45) Date of publication and mention of the grant of the patent: **13.09.2000**
(21) Application number: 96100178.1
(22) Date of filing: 08.01.1996
(51) Int. Cl.: B09B 1/00, F17C 1/00

(54) **CO2, sea bottom throw-away system**
Einrichtung zur Beseitigung von CO2 auf dem Meeresboden
Installation pour le rejet de CO2 sur les fonds sous-marins

(30) Priority: 21.02.1995 JP 5672895
(43) Date of publication of application: 28.08.1996
(73) Proprietor: MITSUBISHI JUKOGYO KABUSHIKI KAISHA, Tokyo (JP)
(72) Inventor: Sonoda, Keisuke, c/o Nagasaki Research, 5-chome, Nagasaki-shi, Nagasaki-ken (JP); Ozaki, Masahiko, c/o Nagasaki Research, 5-chome, Nagasaki-shi, Nagasaki-ken (JP); Fujioka, Yuichi, c/o Nagasaki Research, 5-chome, Nagasaki-shi, Nagasaki-ken (JP); Tsukamoto, Osamu, c/o Nagasaki Shipyard, Nagasaki-shi, Nagasaki-ken (JP)
(74) Representative: Henkel, Feiler, Hänzel

(56) References cited:
- EP-A- 0 408 979
- PATENT ABSTRACTS OF JAPAN vol. 15, no. 227 (C-839), 10 June 1991 & JP-A-03 069508 (MITSUBISHI), 25 March 1991,
- PATENT ABSTRACTS OF JAPAN vol. 14, no. 363 (C-746), 7 August 1990 & JP-A-02 133308 (MITSUBISHI), 22 May 1990,

## Description

### BACKGROUND OF THE INVENTION:

### Field of the Invention:

The present invention relates to a sea bottom throw-away system or a mass disposal system of carbon dioxide (herein referred to as "CO₂") which considered to cause a global warming.

The present invention also relates to an unmanned submersible working boat and to a liquified CO₂ enclosing bag for use in such system and to a method of disposing CO₂ in the deep sea.

### Description of the Prior Art:

Presently the offshore disposal (isolation) technology of CO₂ is on a way of research and development so that there is no practically used one yet, but one of the most practical systems will be such that a CO₂ recovered from a CO₂ mass generation source such as a thermal power station etc. is liquified and thrown away into the deep sea of a depth of 3500 meters or more for sedimentation to be stored on the deep sea bottom.

A means heretofore contemplated as a system therefor is described in EP-A-0 408 979 and shown in a conceptual drawing of Fig. 9, which is such that CO₂ recovered from a thermal power station is liquified and transported to an offshore base 02 by a liquified CO₂ carrier 01, then the liquified CO₂ 06 is thrown away into the deep sea through a throwing pipe 03 hung down from the offshore base 02 into the sea. Here, a throwing pipe outlet 04 is set in the deep sea of a depth of 3500 meters or more where the liquified CO₂ density becomes larger than the sea water density generally because of an influence of the water pressure. This is for the liquified CO₂ 06 thrown from the throwing pipe 03 to make a natural sedimentation onto the sea bottom 05 by a gravity force.

However, in such sea bottom throw-away system of the liquified CO₂ 06, at the time of sedimentation of the liquified CO₂ 06, as a part of the liquified CO₂ 06 melts in the sea water 07 and changes the pH value of the sea water 07, there is considered a fear that an unfavorable influence may be given on the deep sea environment such as an ecosystem etc.

Further, by the liquified CO₂ 08 stored on the deep sea bottom 05 melting in the sea water 07, there is considered not a small change in the deep sea environment in a long range of time.

### SUMMARY OF THE INVENTION:

In view of the circumstances as mentioned above, it is an object of the present invention to provide a sea bottom throw-away system and method and equipment which can prevent an unfavorable influence on the deep sea environment and the deep sea bottom environment.

The present invention provides a system for disposing CO₂ in the deep sea as defined in claim 1, a corresponding method as defined in claim 9, and an unmanned submersible working boat as defined in claim 3 and a liquified CO₂ enclosing bag as defined in claim 6, respectively for use in such system.

According to the present invention constructed as above, while the spherical bag enclosed with the liquified CO₂ together with the capsule is making sedimentation and even after it reached the deep sea bottom, the liquified CO₂ is isolated from the sea water by the impervious sheet so that no liquified CO₂ melts into the sea water and there is no change of the pH value of the sea water.

Thus, there is no unfavorable influence of the liquified CO₂ on the deep sea water environment and the deep sea bottom environment and the liquified CO₂ is isolated permanently on the deep sea bottom.

### BRIEF DESCRIPTION OF THE DRAWINGS:

In the accompanying drawings:

Fig. 1 is a conceptual drawing showing an entire system of one preferred embodiment according to the present invention.

Fig. 2 is a plan view, a side view and a front view showing an unmanned submersible working boat of Fig. 1.

Fig. 3 is an enlarged longitudinal sectional view showing a liquified CO₂ intake of a submersible working boat of Fig. 2.

Fig. 4 is a longitudinal sectional view showing a state that a lower end of a throwing pipe of an offshore base of Fig. 1 is insertedly fitted in a liquified CO₂ intake of an unmanned submersible working boat of Fig. 3.

Fig. 5 is an entire detail view of Fig. 4.

Fig. 6 is a longitudinal sectional view showing a distribution piping branch port and a capsule of the portion "VI" of Fig. 2.

Fig. 7 is a longitudinal sectional view showing a state that a bag enclosed with a liquified CO₂ is let fall together with a capsule from a distribution pipe branch port of Fig. 6.

Fig. 8 is a longitudinal sectional view showing a state that a bag enclosed with a liquified CO₂ is about to be separated from an unmanned submersible working boat of Fig. 7.

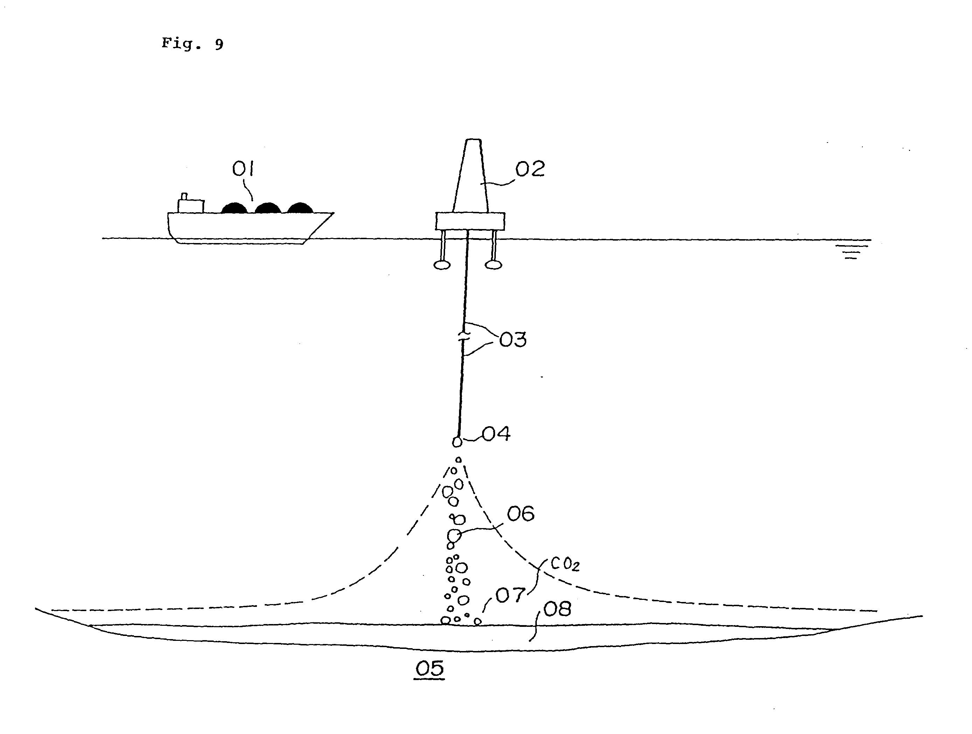

Fig. 9 is a conceptual drawing showing an entire CO₂ deep sea throw-away system as heretofore contemplate.

### DESCRIPTION OF THE PREFERRED EMBODIMENTS:

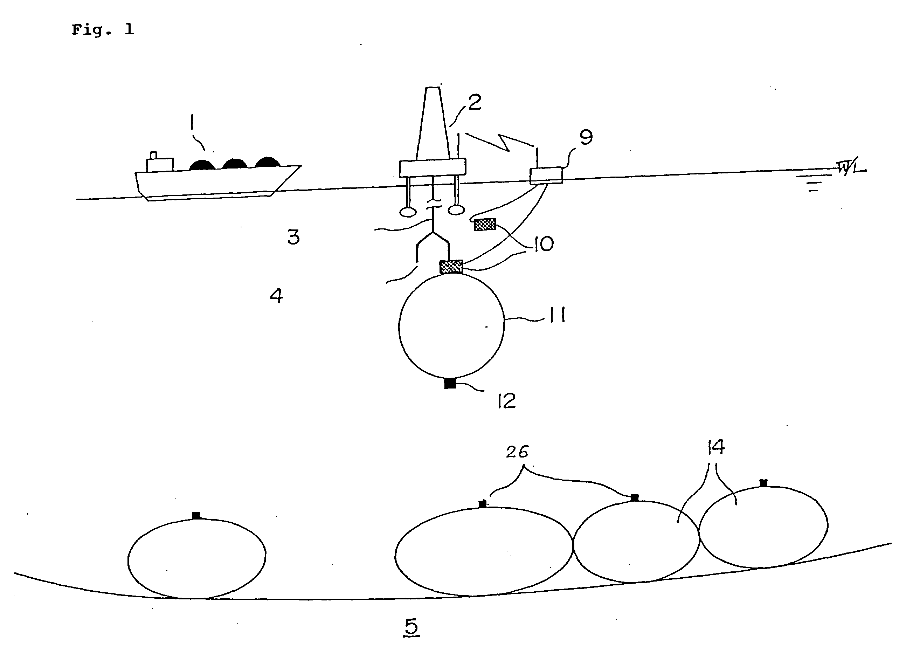

Following is a description of one preferred embodiment according to the present invention. In Fig. 1, an offshore isolating system of CO₂ is composed of an offshore base 2 receiving a liquified CO₂ and having a throwing pipe 3 and a throwing pipe outlet 4 to enclose the liquified CO₂ in a bag 11 in the sea of a depth where a liquid phase state of the liquified CO₂ is held; an unmanned submersible working boat 10 mounting a plurality of capsules 26 each containing said bag 11 and transporting said capsules to the throwing pipe outlet 4; and a control base 9 to control the unmanned submersible working boat 10.

A CO₂ recovered from a mass generation source of CO₂ such as a thermal power station etc. is first liquified and transported to the offshore base 2 by a liquified CO₂ carrier 1. At the offshore base 2, the liquified CO₂ is supplied through the throwing pipe 3 to the unmanned submersible working boat 10 mounting the plurality of capsules 26 each containing the liquified CO₂ enclosing bag 11 connected to the throwing pipe outlet 4 and is enclosed in the bag 11 which is spherical and made of a liquified CO₂ impervious material. The bag 11 is sealed by an enclosing valve 13 after a predetermined amount of the liquified CO₂ is enclosed therein and is separated from the unmanned submersible working boat 10.

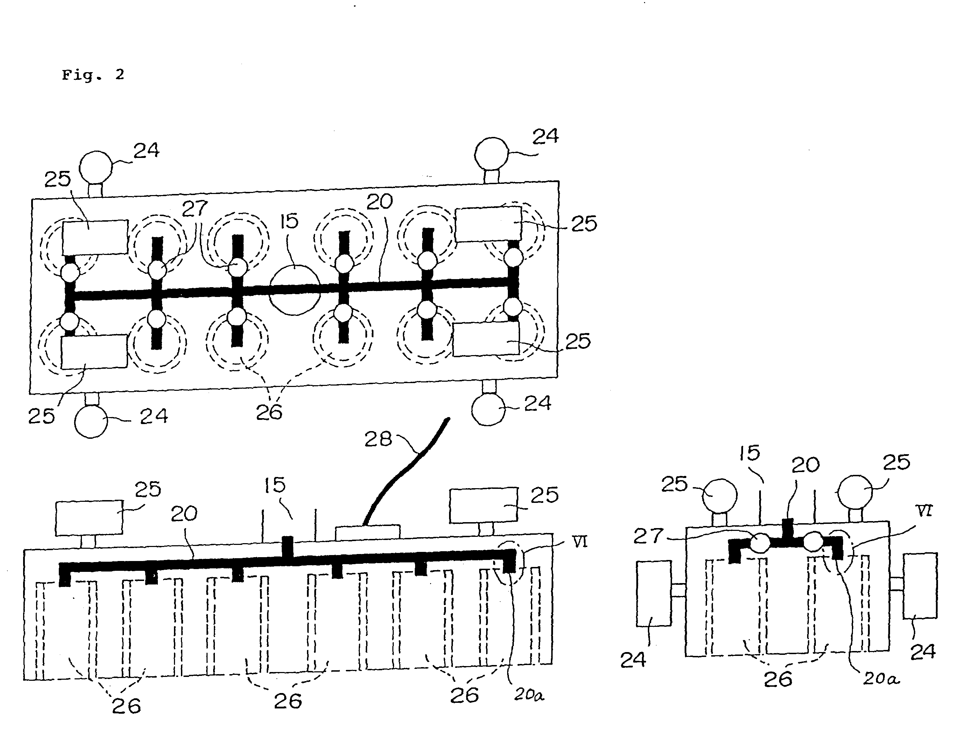

Operations such as connection of the unmanned submersible working boat 10 to the throwing pipe outlet 4, enclosing work of the liquified CO₂, separation of the enclosing bag 11 together with the capsule 26, etc. are remotely controlled through a communication cable 28 (Fig. 2), which is simultaneously a traction cable for an emergency case, from the offshore base 2 via the submersible working boat control base 9. The depth of the throwing pipe outlet 4 is set at a depth where a state that CO₂ becomes a liquid phase, for example, about 4053 kPa (40 atm) at a temperature of 0°C or about 6079.5 kPa (60 atm) at a temperature of 20°C, can be ensued.

The size of the liquified CO₂ enclosing bag 11 is considered appropriate if it is 50 m to 100 m in the diameter. Incidentally, the density of the liquified CO₂ is smaller than that of the sea water at a depth of about 3500 meters or less and is larger than that of the sea water at a depth of more than that. Thus, considering that a floating force may act on the liquified CO₂ in the upper or lower vicinity of the depth where the enclosing work of the liquified CO₂ is performed, in order to sink the enclosing bag 11 together with the capsule 26 in the sea against the floating force, a weight 12 for adjusting the weight is fitted at the lower end of the enclosing bag 11.

Next, another embodiment will be described with reference to Figs. 2 to 5. In Fig. 2, the unmanned submersible working boat 10 holds twelve vertical cylindrical capsules 26 each containing a spherical bag 11 to enclose the liquified CO₂ and is connected to the submersible working boat control base 9 by the cable 28. The submersible working boat 10 mounts a vertical direction propulsion device 24 and a horizontal direction propulsion device 25 for movement in the sea.

The unmanned submersible working boat 10 moving by the propulsion devices 24, 25 connects the throwing pipe outlet 4 and the liquified CO₂ intake 15, which intake 15 is of a cylindrical type and on its inner side a hollow ring-shape rubber 18 expanded or contracted by coming-in or -out of a hydraulic oil is fitted and on its outer side a hydraulic control valve 16 is provided at two places. The hydraulic oil is supplied from the unmanned submersible working boat 10.

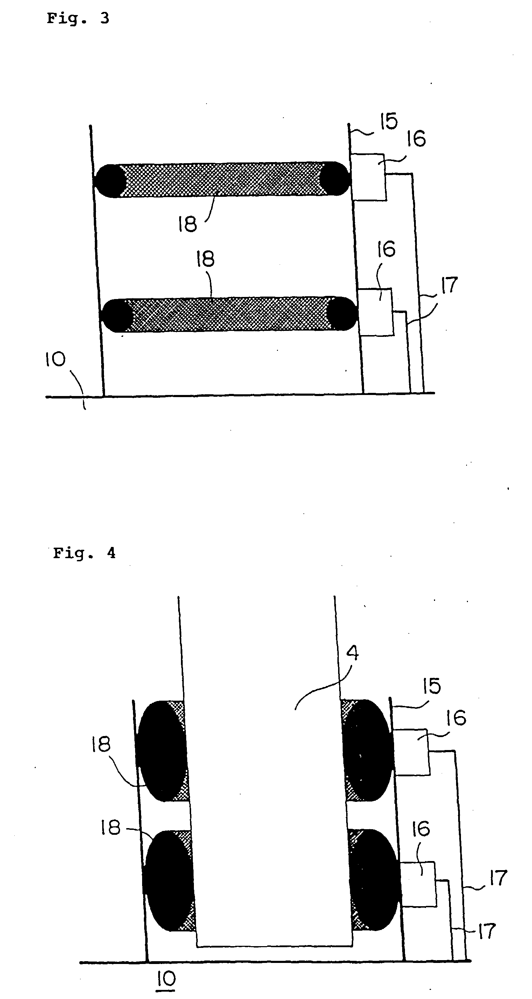

At this time, the liquified CO₂ intake 15 is in a state that, as shown in Fig, 3, the throwing pipe outlet 4 is inserted therein and the hydraulic oil is supplied into the hollow ring-shape rubber 18. Then, as shown in Fig. 4, the rubber 18 is expanded and holds the throwing pipe outlet 4 surroundingly so that the throwing pipe outlet 4 and the liquified CO₂ intake 15 are connected sealingly.

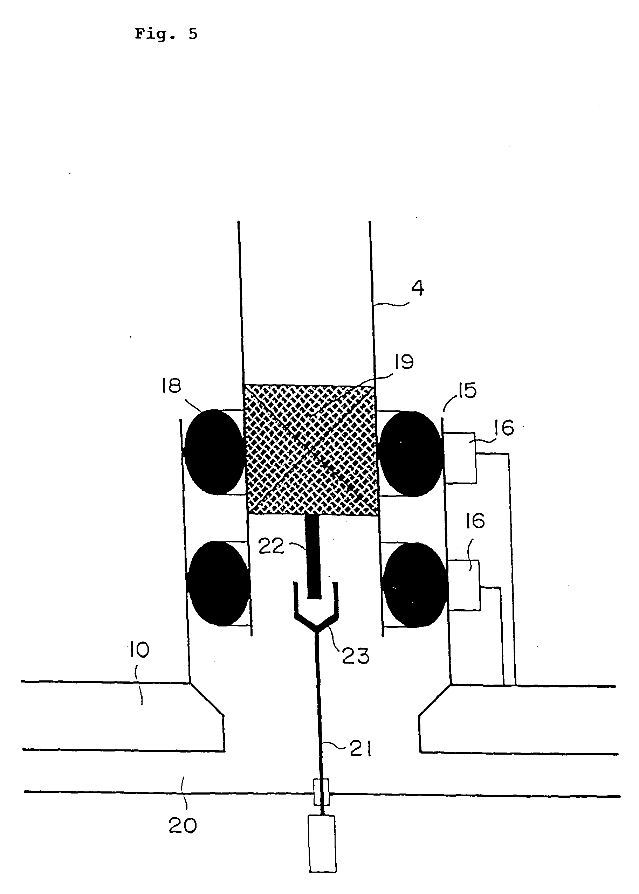

Fig. 5 shows how to take the liquified CO₂ into the submersible working boat 10 from the throwing pipe 4. Upon the throwing pipe outlet 4 and the liquified CO₂ intake 15 of the submersible working boat 10 being connected, an opening and closing shaft 22 of the throwing pipe extreme end valve 19 and an extreme end valve opening and closing device 21 within the submersible working boat 10 are connected by a connecting device 23.

Thus, upon the extreme end valve 19 being opened, the liquified CO₂ flows into the submersible working boat 10. The liquified CO₂ so flown into the submersible working boat 10 is supplied into a capsule 26 through a distribution piping 20 and is enclosed in the enclosing bag 11. The enclosing of the liquified CO₂ is controlled by a valve 27 (Fig. 2). Incidentally, the valve 27 is provided at each capsule 26 and while the liquified CO₂ is being enclosed, only that corresponding valve is opened and all other valves are closed.

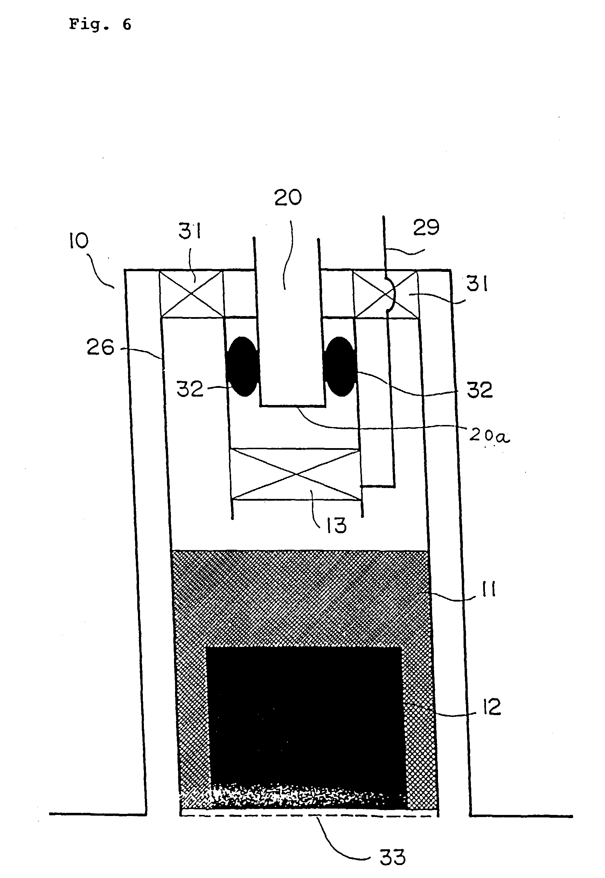

Further, preferred embodiments according to the invention are described with reference to Figs. 6 to 8. A spherical bag 11 to enclose the liquified CO₂ is made of a liquified CO₂ impervious sheet material, and a liquified CO₂ enclosing valve 13 at the upper portion of the bag 11 and a weight adjusting weight 12 at the lower portion of the bag 11, respectively, are provided.

An enclosing process of the liquified CO₂ into the enclosing bag 11 through the capsule 26 and a separation process of the enclosing bag 11 enclosed with a predetermined amount of the liquified CO₂ are described with reference to Fig. 6 which shows a schematic view of the capsule 26. That is, a distribution piping 20 within the submersible working boat 10 and the capsule 26 are connected sealingly by a rubber packing 32. And a bag separation device 31 to separate the enclosing bag 11 together with the capsule 26 is provided on the submersible working boat 10 so as to connect to the capsule 26. At the capsule 26, a capsule enclosing valve 13 is provided and the enclosing bag 11 and the weight adjusting weight 12 are contained in the capsule 26.

At the time of enclosing the liquified CO₂, the bag separation device 31 is first stretched so as to break a partitioning break film 33, thus the enclosing bag 11 and the weight adjusting weight 12 are discharged into the sea. At this time, the distribution piping 20 and the capsule 26 are in a state of a sealing connection.

The partitioning break film 33 has a function to hold the enclosing bag 11 and the weight adjusting weight 12 within the capsule 26 while the enclosing of the liquified CO₂ is not performed and to be broken by the bag separation device 31 stretched to the extent that the enclosing bag 11 is not completely separated from the submersible working boat 10 while the enclosing of the liquified CO₂ is being performed. The partitioning break film 33 is made of a sheet-like or mesh-like rubber, cloth or metal etc. and is fitted to the submersible working boat 10 so as to cover the lower end opening portion of the capsule 26.

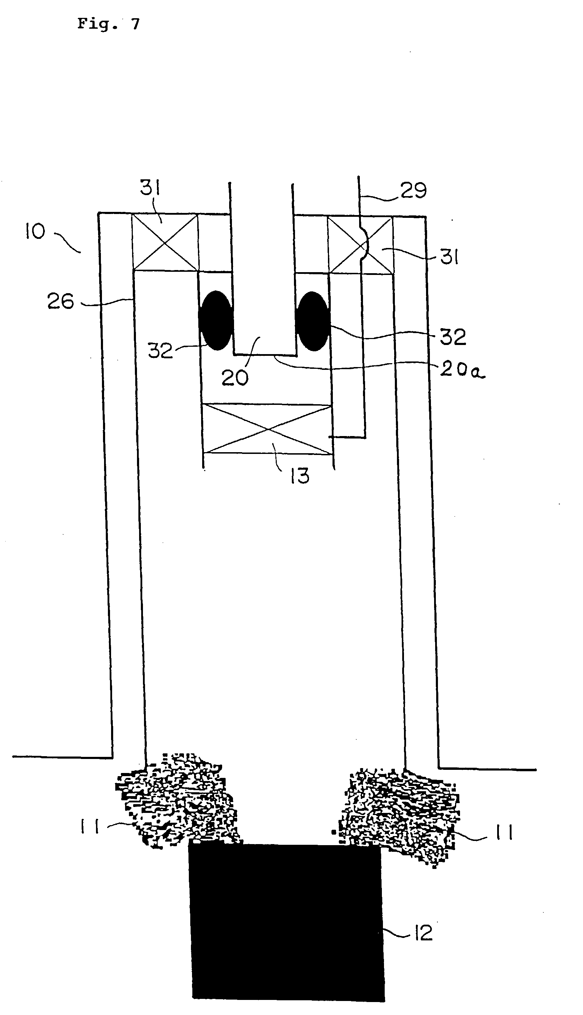

Then, the capsule enclosing valve 13 and the valve 27 (Fig. 2) are opened and the liquified CO₂ is enclosed in the enclosing bag 11. The state immediately after starting to enclose the liquified CO₂ in the enclosing bag 11 is shown in Fig. 7.

Upon finishing to enclose a predetermined amount of the liquified CO₂ in the enclosing bag 11, the capsule enclosing valve 13 and the valve 27 (Fig. 2) are closed, then the bag separation device 31 is further stretched and the liquified CO₂ enclosing bag 11 together with the capsule 26 is separated from the submersible working boat 10.

Incidentally, immediately before finishing the enclosing, a preparation for a next enclosing (breaking of the partitioning break film 33 of the next capsule 26) is made and a change of the capsule enclosing valve 13 and the valve 27 from the capsule 26 which is now being enclosed to the next capsule to be enclosed is made so that the enclosing of the liquified CO₂ is controlled continuously.

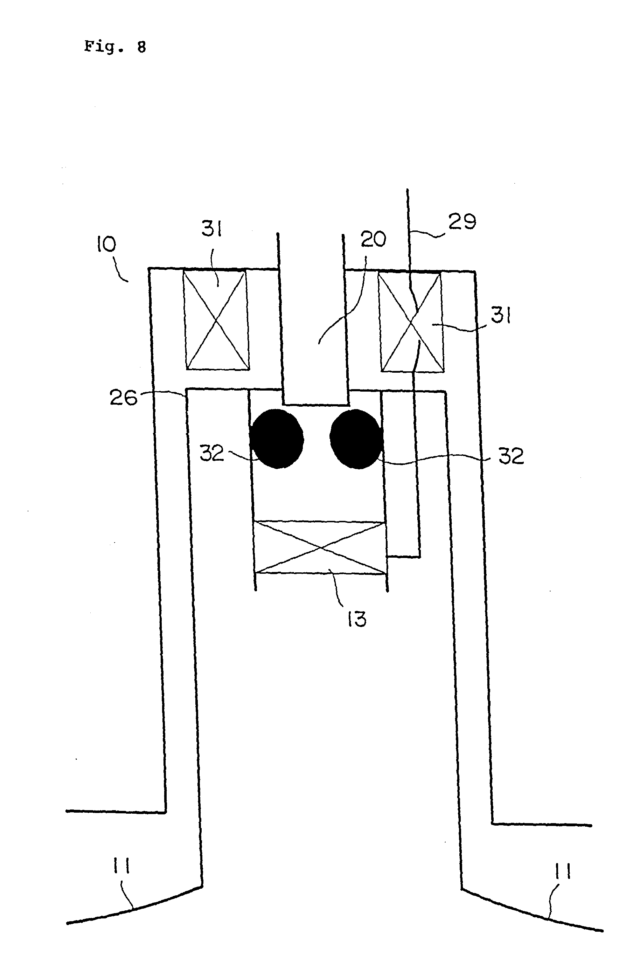

The state immediately after the enclosing bag 11 enclosed with a predetermined amount of the liquified CO₂ is separated together with the capsule 26 from the submersible working boat 10 is shown in Fig. 8. The submersible working boat 10 which has discharged all the bags 11 enclosed with the liquified CO₂ together with the capsules 26 closes the extreme end valve 19 of the throwing pipe outlet 4 (Fig. 1) and returns to the submersible working boat control base 9.

Incidentally, as shown in Fig. 1, there are a plurality of branches of the throwing pipe outlet 4 (two branches in this preferred embodiment), and when a submersible working boat 10 leaves one branch, another submersible working boat 10 is connected to another branch and extreme end valves 19 of the two branches are switched at same time so that the liquified CO₂ is enclosed continuously.

The submersible working boat 10 returned to the control base 9 mounts capsules 26 again and goes so as to connect to the throwing pipe outlet 4 before another submersible working boat 10 discharges all its capsules 26. Thus, the liquified CO₂ is enclosed in the enclosing bag 11, makes sedimentation in the sea and is stored on the deep sea bottom 5.

According to the inventions, following effects are obtained:
(1) As the throwing work of liquified CO₂ into the deep sea is performed at a depth where a liquid phase state of the liquified CO₂ is held, a cost of the throwing devices is reduced in comparison with a case where the work is performed at a depth of more than 3500 meters.
(2) There is no unfavorable influence on the offshore ecosystem accompanying with throwing away of liquified CO₂ into the deep sea.
(3) A mass amount of CO₂ which is considered to cause a global warming can be steadily and permanently isolated from the atmospheric zone.

As the enclosing work of liquified CO₂ in the sea at a depth where a liquid phase state of the liquified CO₂ is held can be performed unmannedly by a remote control from a control base, safety of the work can be ensured.

As the enclosing bag made of a liquified CO₂ impervious material causes no leakage of liquified CO₂ on the sea bottom, there is no unfavorable influence on the offshore ecosystem.

While a principle of the present invention has been described above, it is intended that all matter contained in the above description and illustrated in the accompanying drawings shall be interpreted to be illustrative and not as a limitation to the scope of the claims.

## Claims

1. A system for disposing CO₂ in the deep sea, comprising:
an offshore base (2) provided floatingly on the offshore sea, said offshore base (2) being adapted to receive liquified CO₂ from a liquified CO₂ carrier (1) and having a throwing pipe (3) with a throwing pipe outlet (4) reaching to a depth of the sea where a liquid phase state of the liquified CO₂ is held;
a plurality of capsules (26) each containing a liquified CO₂ enclosing bag (11); and an unmanned submersible working boat (10) being adapted to transport said capsules (26) to said depth of the sea where a liquid phase state of the liquified CO₂ is held and to couple to said throwing pipe outlet (4) to receive the liquified CO₂ and to supply the same into said liquified CO₂ enclosing bags (11) at said depth and then to release said liquified CO₂ enclosing bags (11) filled with said CO₂.

2. The system for disposing CO₂ in the deep sea according to claim 1, further comprising a control base (9) on the offshore sea for controlling said unmanned submersible working boat (10).

3. An unmanned submersible working boat for use in the CO₂ deep sea throw-away system according to Claim 1 or 2, comprising
an intake (15) to be connected to the throwing pipe outlet (4) of the throwing pipe (3) to receive liquified CO₂;
a containing portion for receiving a plurality of capsules (26) each containing a liquified CO₂ enclosing bag (11) and being adapted to be separated and released from said containing portion; and
a distribution piping (20) for transferring the liquified CO₂ from said intake (15) to said CO₂ enclosing bags (11).

4. The unmanned submersible working boat according to claim 3, further comprising
a moving device (24,25) to move in a vertical direction and in a horizontal direction;
each of said plurality of capsules (26) containing a liquified CO₂ enclosing bag (11) being openable at a lower end thereof; and
said unmanned submersible working boat (10) being adapted to be connected to said control base (9) by a communication cable (28).

5. The unmanned submersible working boat according to claim 3 or 4, further comprising
a sealing member (18) for sealing said intake (15) with respect to said throwing pipe outlet (4) of the throwing pipe (3);
a hydraulic control valve (16) for controlling supply of hydraulic fluid to said sealing member (18);
a valve opening and closing device (21,22,23) for opening and closing a valve (19) provided at an extreme end of said throwing pipe (3); and
a bag separation device (31) for separating said liquified CO₂ enclosing bag (11).

6. A liquified CO₂ enclosing bag for use in the CO₂ deep sea throw-away system according to Claim 1 or 2 and in the unmanned submersible working boat according to claim 3, 4 or 5, comprising:
a spherical bag (11) made of a liquified CO₂ impervious sheet material,
a valve (13) provided at the upper portion thereof to receive the liquified CO₂, and
a weight (12) fitted at the lower portion thereof to adjust the weight of the enclosing bag (11) to let the enclosing bag sink in the sea against a floating force acting on the bag when it is filled with the liquified CO₂.

7. The liquified CO₂ enclosing bag according to Claim 6, further comprising a capsule (26) containing said liquified CO₂ enclosing bag (11), said valve (13) and said weight (12).

8. The liquified CO₂ enclosing bag according to Claim 6 or 7, further comprising a rubber packing (32) at an inlet portion for the liquified CO₂.

9. A method of disposing CO₂ in the deep sea, comprising:
carrying liquified CO₂ by a liquified CO₂-carrier (1) to an offshore base (2) provided floatingly on the offshore sea, said base (2) having a throwing pipe (3) and a throwing pipe outlet (4) reaching to a depth of the sea where a liquid phase state of the liquified CO₂ is held;
mounting a plurality of capsules (26) each containing a liquified CO₂ enclosing bag (11) to an unmanned submersible working boat (10);
transporting said capsules (26) into the depth of the sea where a liquid phase state of the liquified CO₂ is held and connecting said capsules to said throwing pipe outlet (4) of said throwing pipe (3) of said offshore base (2);
receiving said liquified CO₂ from said liquified CO₂-carrier and supplying the same through said throwing pipe (3) into said liquified CO₂ enclosing bag (11) at said depth; and
letting the liquified CO₂ together with said liquified CO₂ enclosing bag (11) and said capsule (26) fall onto the sea bottom.

## Patentansprüche

1. System zum Versenken von CO₂ in der Tiefsee, mit:
einer Offshore-Basis (2), die schwimmend auf hoher See (Offshore) vorgesehen ist, wobei die Offshore-Basis (2) verflüssigtes CO₂ von einem Transporter (1) für verflüssigtes CO₂ aufzunehmen vermag und eine Auswurfrohrleitung (3) mit einem Auswurfrohrleitungs-Auslaß (4) aufweist, die bzw. der bis zu einer Meerestiefe reicht, in der ein Flüssigphasenzustand des verflüssigten CO₂ beibehalten wird,
einer Mehrzahl von Kapseln (26), von denen jede einen Sack (11) zum Umschließen von verflüssigtem CO₂ enthält, und
einem unbemannten, tauchfähigen Arbeitsboot (10), welches die Kapseln (26) zu der Meerestiefe, in der ein Flüssigphasenzustand des verflüssigten CO₂ beibehalten wird, transportieren und an dem Auswurfrohrleitungs-Auslaß (4) ankoppeln kann, um das verflüssigte CO₂ aufzunehmen und dasselbe in dieser Tiefe in die Säcke (11) zum Umschließen von verflüssigtem CO₂ zu liefern und dann die mit dem CO₂ gefüllten Säcke (11) zum Umschließen von verflüssigtem CO₂ freizugeben.

2. System zum Versenken von CO₂ in der Tiefsee gemäß Anspruch 1, ferner mit einer Steuerbasis (9) auf hoher See (Offshore) zum Steuern des unbemannten, tauchfähigen Arbeitsboots (10).

3. Unbemanntes, tauchfähiges Arbeitsboot zur Verwendung in dem CO₂-Tiefsee-Versenkungssystem gemäß Anspruch 1 oder 2, mit
einem mit dem Auswurfrohrleitungs-Auslaß (4) der Auswurfrohrleitung (3) zu verbindenden Einlaß (15) zur Aufnahme von verflüssigtem CO₂,
einem Aufnahmeabschnitt zur Aufnahme einer Mehrzahl von Kapseln (26), von denen jede einen Sack (11) zum Umschließen von verflüssigtem CO₂ enthält und von dem Aufnahmeabschnitt getrennt und freigegeben zu werden vermag, und
eine Verteilerleitung (20) zum Übertragen des verflüssigten CO₂ von dem Einlaß (15) zu den Säcken (11) zum Umschließen von verflüssigtem CO₂.

4. Unbemanntes, tauchfähiges Arbeitsboot gemäß Anspruch 3, ferner mit
einer Bewegungsvorrichtung (24,25) zum Bewegen in einer vertikalen Richtung und einer horizontalen Richtung,
wobei jede der Mehrzahl von einen Sack (11) zum Umschließen von verflüssigtem CO₂ enthaltenden Kapseln (26) an einem unteren Ende derselben geöffnet werden kann, und
das unbemannte, tauchfähige Arbeitsboot (10) durch ein Kommunikationskabel (28) mit der Steuerbasis (9) verbunden werden kann.

5. Unbemanntes, tauchfähiges Arbeitsboot gemäß Anspruch 3 oder 4, ferner mit
einem Dichtungselement (18) zum Abdichten des Einlasses (15) in Bezug auf den Auswurfrohrleitungs-Auslaß (4) der Auswurfrohrleitung (3),
einem hydraulischen Steuerventil (16) zum Steuern der Zufuhr von Hydraulikfluid zu dem Dichtungselement (18),
einer Ventilöffnungs- und -schließvorrichtung (21,22,23) zum Öffnen und Schließen eines an einem äußersten Ende der Auswurfrohrleitung (3) vorgesehenen Ventils (19), und
einer Sack-Trennvorrichtung (31) zum Trennen des Sacks (11) zum Umschließen von verflüssigtem CO₂.

6. Sack zum Umschließen von verflüssigtem CO₂ zur Verwendung in dem C02-Tiefsee-Versenkungssystem gemäß Anspruch 1 oder 2 sowie in dem unbemannten, tauchfähigen Arbeitsboot gemäß Anspruch 3, 4 oder 5, mit:
einem aus einem gegenüber verflüssigtem CO₂ undurchlässigen Bahn- bzw. Lagenmaterial gefertigten, kugelförmigen Sack (11),
einem am oberen Abschnitt desselben vorgesehenen Ventil (13) zur Aufnahme des verflüssigten CO₂, und
einem am unteren Abschnitt desselben angebrachten Gewicht (12) zur Anpassung des Gewichts des Sacks (11) zum Umschließen, um den Sack zum Umschließen gegen eine auf den Sack wirkende Auftriebskraft, wenn dieser mit dem verflüssigten CO₂ gefüllt ist, im Meer sinken zu lassen.

7. Sack zum Umschließen von verflüssigtem CO₂ gemäß Anspruch 6, ferner mit einer Kapsel (26), die den Sack (11) zum Umschließen von verflüssigtem CO₂, das Ventil (13) und das Gewicht (12) enthält.

8. Sack zum Umschließen von verflüssigtem CO₂ gemäß Anspruch 6 oder 7, ferner mit einer Gummidichtung (32) an einem Einlaßabschnitt für das verflüssigte CO₂.

9. Verfahren zum Versenken von CO₂ in der Tiefsee, mit folgenden Schritten:
Verbringen von verflüssigtem CO₂ durch einen Transporter (1) für verflüssigtes CO₂ zu einer schwimmend auf hoher See (Offshore) vorgesehenen Offshore-Basis (2), wobei die Basis (2) eine Auswurfrohrleitung (3) und einen Auswurfrohrleitungs-Auslaß (4) aufweist, die bzw. der bis zu einer Meerestiefe reicht, in der ein Flüssigphasenzustand des verflüssigten CO₂ beibehalten wird,
Anbringen einer Mehrzahl von Kapseln (26), von denen jede einen Sack (11) zum Umschließen von verflüssigtem CO₂ enthält, an einem unbemannten, tauchfähigen Arbeitsboot (10),
Transportieren der Kapseln (26) zu der Meerestiefe, in der ein Flüssigphasenzustand des verflüssigten CO₂ beibehalten wird, und Verbinden der Kapseln mit dem Auswurfrohrleitungs-Auslaß (4) der Auswurfrohrleitung (3) der Offshore-Basis (2),
Aufnehmen des verflüssigten CO₂ von dem Transporter (1) für verflüssigtes CO₂ und Zuführen desselben durch die Auswurfrohrleitung (3) zu dem Sack (11) zum Umschließen von verflüssigtem CO₂ in dieser Tiefe, und
Fallenlassen des verflüssigten CO₂ zusammen mit dem Sack (11) zum Umschließen von verflüssigtem CO₂ und der Kapsel (26) auf den Meeresgrund.

## Revendications

1. Un système pour effectuer un rejet sous-marin de CO₂, comprenant:
une base marine (2), mise en flottaison en mer au large, ladite base marine (2) étant adaptée pour recevoir du CO₂ liquéfié depuis un transporteur de CO₂ liquéfié (1) et ayant un tube d'injection (3) doté d'une sortie de tube d'injection (4), atteignant une profondeur de la mer à laquelle un état en phase liquide du CO₂ liquéfié est conservé;
une pluralité de capsules (26), contenant chacune un sac (11) contenant du CO₂ liquéfié; et un navire de travail (10), submersible, sans équipage, adapté pour transporter lesdites capsules (26) à ladite profondeur de la mer à laquelle un état de phase liquide du CO₂ liquéfié est conservé et pour effectuer l'accouplement à ladite sortie de tube d'injection (4) afin de recevoir le CO₂ liquéfié et pour fournir celui-ci à l'intérieur des sacs (11) enfermant ledit CO₂ liquéfié, à ladite profondeur, puis pour libérer lesdits sacs (11) enfermant ledit CO₂ liquéfié, ayant été remplis par ledit CO₂.

2. Le système pour effectuer un rejet sous-marin de CO₂ selon la revendication 1, comprenant en outre une base de commande (9) installée en pleine mer, pour commander ledit navire de travail (10) submersible, sans équipage.

3. Un navire de travail submersible sans équipage, pour utilisation dans le système de rejet sous-marin de CO₂, selon la revendication 1 ou 2, comprenant:
une admission (15), devant être reliée à la sortie de tube d'injection (4) du tube d'injection (3), afin de recevoir du CO₂ liquéfié;
une partie contenante, pour recevoir une pluralité de capsules (26), chacune contenant un sac (11) enfermant du CO₂ liquéfié et étant adaptée pour être séparée et relâchée de ladite partie contenante; et
une tuyauterie de distribution (20) pour transférer le CO₂ liquéfié depuis ladite entrée (15) auxdits sacs (11) enfermant du CO₂.

4. Le navire de travail submersible sans équipage selon la revendication (3) comprenant en outre :
un dispositif de déplacement (24, 25) afin de produire un déplacement en direction verticale et/ou en direction horizontale;
chacune de ladite pluralité de capsules (26) contenant un sac (11) enfermant du CO₂ liquéfié, susceptible d'être ouvert à une extrémité inférieure de celui-ci; et
ledit navire de travail (10) submersible sans équipage étant adapté pour être relié à ladite base de commande (9) par un câble de communication (28).

5. Le navire de travail submersible sans équipage selon la revendication 3 ou 4, comprenant en outre:
un élément d'étanchéité (18) pour isoler de façon étanche ladite admission (15) vis-à-vis de ladite sortie de tube d'injection (4) du tube d'injection (3);
une soupape de commande hydraulique (16) pour commander la fourniture de fluide hydraulique audit élément d'étanchéité (18);
un dispositif d'ouverture et de fermeture de soupape (21, 22, 23), pour, ouvrir et fermer une soupape (19) prévue à une extrémité ultime dudit tube d'injection (3); et
un dispositif de séparation de sac (31) pour séparer ledit sac (11) enfermant du CO₂ liquéfié.

6. Un sac enfermant du CO₂ liquéfié, pour utilisation dans le système de rejet sous-marin de CO₂ selon la revendication 1 ou 2 et dans le navire de travail submersible sans équipage selon la revendication 3, 4 ou 5, comprenant:
un sac sphérique (11) réalisé en un matériau en feuille, imperméable au CO₂ liquéfié,
une soupape (13) prévue à sa partie supérieure afin de recevoir le CO₂ liquéfié, et
un poids de lest (12), monté sur sa partie inférieure, afin d'ajuster le poids du sac d'enfermement (11), afin de le faire descendre dans la mer, à l'encontre de la force de flottaison agissant sur le sac lorsqu'il est rempli par le CO₂ liquéfié.

7. Le sac d'enfermement de CO₂ liquéfié selon la revendication 6, comprenant en outre une capsule (26) contenant ledit sac (11) enfermant du CO₂ liquéfié, ladite soupape (13) et ledit poids de lest (12).

8. Le sac d'enfermement de CO₂ liquéfié selon la revendication 6 ou 7, comprenant en outre une garniture en caoutchouc (32) sur une partie entrée destinée au CO₂ liquéfié.

9. Un procédé de rejet sous-marin de CO₂, comprenant:
le transport de CO₂ liquéfié par un transporteur de CO₂ liquéfié (1), à une base marine (2), installée flottante en pleine mer, ladite base (2) ayant un tube d'injection (3) et une sortie de tube d'injection (4), atteignant une profondeur de la mer à laquelle un état de phase liquide du CO₂ liquéfié est conservé;
le montage d'une pluralité de capsules (26), chacune contenant un sac (11) enfermant du CO₂ liquéfié, sur un navire de travail (10) submersible, sans équipage;
le transport desdites capsules (26) au fond de la mer, à un endroit auquel un état de phase liquide du CO₂ liquéfié est conservé, et connexion desdites capsules à ladite sortie de tube d'injection (4) dudit tube d'injection (3) de ladite base marine (2);
la réception dudit CO₂ liquéfié depuis ledit transporteur de CO₂ liquéfié et fourniture de celui-ci, par ledit tube d'injection (3), dans le sac (11) d'enfermement de CO₂ liquéfié, à ladite profondeur; et
l'abandon du CO₂ liquéfié conjointement avec ledit sac (11) d'enfermement de CO₂ liquéfié et ladite capsule (26), pour qu'il tombe sur le fond sous-marin.
